# EUROPÄISCHE PATENTSCHRIFT

(11) **EP 1 002 897 B1**
(45) Veröffentlichungstag und Bekanntmachung des Hinweises auf die Patenterteilung: **05.03.2003**
(21) Anmeldenummer: 99115857.7
(22) Anmeldetag: 12.08.1999
(51) Int. Cl.: D21B 1/08

(54) **Verfahren und Vorrichtung zum Auflockern von gepresstem papierfaserhaltigen Material**
Process and apparatus for shredding compacted papermaking fibrous material
Procédé et dispositif de désagrégation d' un matériau comprimé contenant des fibres pour papeterie

(30) Priorität: 15.10.1998 DE 19847532
(43) Veröffentlichungstag der Anmeldung: 24.05.2000
(73) Patentinhaber: Voith Paper Patent GmbH, 89522 Heidenheim (DE)
(72) Erfinder: Flecken, Peter, 53879 Euskirchen (DE); Peters, Erich, 53879 Euskirchen (DE); Udelhofen, Jakob, 53909 Zülpich (DE)

(56) Entgegenhaltungen:
- US-A- 2 236 969
- US-A- 3 643 591
- US-A- 5 667 079

## Beschreibung

Die Erfindung bezieht sich auf ein Verfahren zum Auflockern von gepreßtem papierfaserhaltigen Material gemäß dem Oberbegriff des Anspruchs 1.

Bei der Herstellung von Papier oder Karton wird in vielen Fällen Altpapier eingesetzt, welches in Ballenform angeliefert wird. Auch nativer Zellstoff wird oft nach der Herstellung zunächst in Ballenform gebracht. Solche Ballen werden hergestellt, indem das Material gepreßt und anschließend zumeist mit Drähten oder Bändern verschnürt wird, so daß sie eine kompakte Form haben und relativ leicht transportierbar sind. Bei der Verwendung als neuer Rohstoff ist es erforderlich, diesen gepreßten Ballen wieder in einzelne Papierbahnen oder -stücke zu zerkleinern, um die anschließenden Verfahren zur Aufbereitung des Stoffes durchführen zu können. Auch nachdem die Bindedrähte oder Bänder von den gepreßten Ballen entfernt worden sind, ist dieser in den meisten Fällen komplett oder noch so grobstückig zusammenhängend, daß der Eintrag, z.B. in einen mit Wasser betriebenen Stofflöser, Probleme bereiten kann. Hinzu kommt, daß in vielen Fällen das so angelieferte Material mit Störstoffen verschmutzt ist, die z.B. in Form von Kunststofffolien mit eingepreßt sind. Diese Kunststofffolien haften sehr oft an dem Papiermaterial, was bei ihrer frühzeitigen Entfernung hinderlich ist.

In der DE 34 39 098 A1 ist ein Verfahren beschrieben, bei dem Altpapierballen in relativ aufwendiger Weise aufgelockert, zerkleinert und gereinigt werden, um sie anschließend in einem Pulper mit Wasser zu versetzen und so in Suspension zu bringen. Obwohl dieses Verfahren in vielen Fällen als eine geeignete Stufe zum Beginn einer Altpapieraufbereitung angesehen werden kann, hat es sich infolge des hohen erforderlichen Aufwandes nicht allgemein durchsetzen können.

Es sind bereits Maschinen bekannt, mit denen ein Verfahren der o.g. Art ausgeführt werden könnte. Dabei handelt es sich um robuste Grobzerkleinerungsmaschinen, wie z.B. Shredder, welche eigens dafür gedacht sind, grobe Stoffe, z.B. Schrott oder steiniges Material vorzuzerkleinern, um es anschließend weiter bearbeiten und sortieren zu können. Der Einsatz eines Shredders bei einem Verfahren der hier genannten Art würde wegen der Größe der Ballen oder Ballenbruchstücke eine sehr große Maschine mit entsprechend hohem Preis erfordern. Nachteilig wären nicht nur der Preis und der Platzbedarf einer solchen Vorrichtung, sondern auch der hohe Energieverbrauch. Der Betrieb einer solchen Maschine ist zudem sehr rauh und führt zu einer beträchtlichen Lärmbelästigung.

Eine andere Möglichkeit wäre die Verwendung eines Schneckenextruders oder eines sonstigen oben offenen Schneckenförderers mit mindestens zwei Förderschnecken. Auch solche Maschinen sind allerdings sehr aufwendig und haben einen hohen Energieverbrauch. Zudem wäre damit zu rechnen, daß sie den gepreßten Stoff zumindest teilweise quetschen anstatt ihn aufzulockern.

Es ist daher Aufgabe der Erfindung, ein Verfahren zu schaffen, mit dem es möglich ist, gepreßtes papierfaserhaltiges Material aufzulockern, und zwar vorzugsweise wenigstens so weit, daß eine Verarbeitung im Stofflöser möglich und sinnvoll ist und dabei den Aufwand möglichst gering zu halten.

Diese Aufgabe wird durch die Merkmale im Kennzeichen des Anspruchs 1 gelöst.

Die darauf rückbezogenen Unteransprüche zeigen besonders geeignete Ausgestaltungen des Verfahrens.

Im Vorrichtungsanspruch 26 und den sich daran anschließenden Unteransprüchen werden besonders geeignete Vorrichtungen zur Durchführung des Verfahrens beschrieben.

Mit Hilfe des erfindungsgemäßen Verfahrens wird das Material bei seinem Weg über die rotierenden Schlegelwalzen kontinuierlich aufgelockert und der durch Pressen erzeugte Verband gelöst. Das heißt also, daß die Ballen und Ballenbruchstücke zerkleinert werden. Dabei wird das Material aufgrund des Gewichtes gegen die umlaufenden Schlegel gedrückt, kann aber auch gegebenenfalls nach oben oder seitlich ausweichen. Durch diese Form der mechanischen Bearbeitung werden Kräfte übertragen, welche besonders gut geeignet sind, die erfindungsgemäße Aufgabe zu erfüllen. Sie reichen nämlich aus, um den Verband des gepreßten Materials aufzulösen, sind aber nicht so hoch, daß ein unnötiger Energeiaufwand erforderlich wäre und/oder eine Beschädigung der beim Verfahren verwendeten Vorrichtungen zu befürchten wäre. Letzteres gilt insbesondere bei im Material eingeschlossenen Fremdteilen.

Ein weiterer Vorteil liegt darin, daß das Verfahren sehr gut auf den jeweils vorliegenden Anwendungsfall abgestimmt werden kann. Es ist nämlich davon auszugehen, daß das Material in sehr uneinheitlicher Form angeliefert wird. Große Abweichungen ergeben sich nicht nur bei der Ballengröße und unterschiedlichen Preßdrücken, sondern sie sind auch durch Unterschiede des Materials selbst bedingt. Es ist leicht einzusehen, daß sich z.B. grobe Kartonagen auf der Ballenpresse anders verhalten als schnipselförmige Büroabfälle (grafische Papiere, Akten). Hinzu kommen unterschiedliche Feuchtigkeit und unterschiedlicher Verschmutzungsgrad. Das vorgeschlagene Verfahren kann apparativ auf die Anwendungsfälle abgestimmt werden, z.B. durch geeignete Wahl der Anzahl von Schlegelwalzen, bzw. Form der verwendeten Schlegel. Aber auch bei der Verwendung einer bereits bestehenden Apparatur, die für das Verfahren geeignet ist, kann man z.B. bei Schrägstellen der Apparatur und durch Variation der Geschwindigkeit flexibel auf unterschiedliche Anforderungen reagieren.

Die Erfindung und ihre Vorteile werden erläutert anhand von Figuren. Dabei zeigen:
- Fig. 1: den grundsätzlichen Ablauf des Verfahrens anhand einer geeigneten Vorrichtung;
- Fig. 2 bis 5: jeweils modifizierte Verfahrensabläufe mit entsprechenden vereinfacht dargestellten Vorrichtungen;
- Fig. 6: eine spezielle Ansicht der Schlegelwalze, vereinfacht;
- Fig. 7a bis 7f: spezielle Schlegelformen;
- Fig. 8: eine erfindungsgemäße Vorrichtung in Seitenansicht;
- Fig. 9: die in Fig. 8 gezeigte Vorrichtung in Ansicht von vome;
- Fig. 10: eine weitere Variation der Schlegelwalzen, Seitenansicht;
- Fg. 11: die Schlegelwalze der Fig. 10, geschnitten.

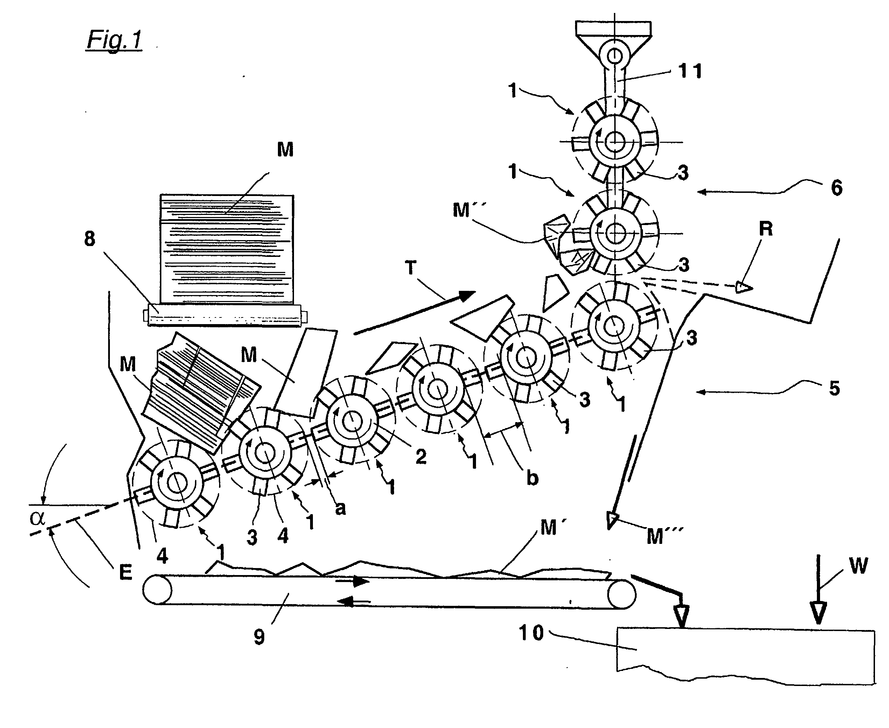

Die Fig. 1 zeigt den Ablauf des erfindungsgemäßen Verfahrens anhand einer der möglichen apparativen Ausführungsformen. Links erkennt man auf einem nur teilweise gezeichneten Förderband 9 einen gepreßten Ballen, welcher aus dem papierfaserhaltigen Material M besteht. Dabei ist die an sich bekannte Entdrahtungsstation nicht dargestellt, in der die Bindedrähte oder Bänder, die den Ballen auf dem Transport zusammengehalten haben, bereits entfernt worden sind. Die vorherige Entfernung ist besonders zweckmäßig; es können aber auch Möglichkeiten vorgesehen sein, um die Drähte bzw. Bänder erst während des Auflockerns und Zerkleinerns des Materials zu entfernen. Auf die Entfernung von Bändern wird später noch eingegangen werden. Die Figur zeigt ferner, daß in der Ebene E insgesamt sechs Schlegelwalzen 1 angeordnet sind, wodurch sie eine erste Sektion 5 bilden. Sie sind jeweils mit einer Anzahl von Schlegeln 3 versehen. Die Schlegelwalzen 1 werden durch einen nicht gezeigten Antrieb in Rotation versetzt und haben einen Drehsinn in der Weise, daß das oben aufliegende Material M in Transportrichtung T, etwa parallel zur Ebene E, heraufgefördert wird. Dabei ist hier die Transportrichtung T quer zur Laufrichtung des zuführenden Förderbandes 8. Abgebrochene Ballenstücke liegen auf diese Weise quer zu den Walzen und blockieren nicht die Walzenzwischenräume. Durch die Wirkung der Schlegel 3 wird das Material aufgelockert und eventuell zerkleinert, so daß das Feinmaterial M' zwischen den Schlegeln, bzw. den Schlegelwalzen hindurchfallen kann. Dazu werden benachbarte Wellen 2 so angeordnet, daß sich zwischen ihnen Zwischenräume mit einer lichten Weite b bilden. Beim Feinmaterial M' handelt es sich dann im wesentlichen um Papier- oder Kartonstücke. Das Feinmaterial M' wird hier über ein Förderband 9 in einen Stofflöser 10 gebracht, um es mit Wasser W in Suspension zu überführen. Es wäre auch eine andere Behandlung denkbar, z.B. eine weitere Zerkleinerung und/oder Aussortierung von faserfremden Bestandteilen.

Die Schlegelwalzen 1 sind hier so angeordnet, daß die Hüllkreise 4 der darauf befestigten Schlegel 3 nicht die Hüllkreise 4 der benachbarten Walzen schneiden oder berühren. Vielmehr haben sie voneinander einen radialen Abstand a. Die Schlegel 3 sind mit der Welle 2 der Schlegelwalze 1 starr verbunden, könnten aber auch elastisch oder gelenkig befestigt sein. Die Ebene E steht zur Horizontalen in einem Stellwinkel α, der hier 30° beträgt. Dieser Stellwinkel α bestimmt wesentlich die Zeit, in der das Material M die Schlegelwalzen 1 passiert hat. Deshalb kann eine Verstellung des Winkels zur Steuerung dienen.

Der Teil des Materials M, der nach einmaligem Durchlaufen der ersten Sektion 5 noch nicht so weit aufgelockert (zerkleinert) worden ist, daß er in das Feinmaterial M' gelangen konnte, wird bei der hier gezeigten Durchführung des Verfahrens in der zweiten Sektion 6 als Grobmaterial M" durch eine siebte und/oder achte Schlegelwalze erfaßt und in den Bereich der übrigen Schlegelwalzen zurückgeschleudert, also in die erste Sektion 5. Die Teile des Materials M bzw. Grobmaterials M", welche in der ersten Sektion 5 - eventuell auch nach mehrmaligem Durchlaufen - nicht in das Feinmaterial M' gelangt sind, sind resistentes Material M"'. Dieses besteht in der Regel aus großflächigen Papieren/Kartonagen, eventuell vermischt mit Störstoffen (Kunststoffolien). Es wird aus dem Wirkungsbereich der Schlegelwalzen entfernt und kann z.B. zusammen mit dem Feinmaterial M' weiterverarbeitet werden. Oder es bildet eine Fraktion, den Rejekt R. Dann ist es von Vorteil, wenn der Rejekt R möglichst wenig Fasern enthält; wo das nicht gelingt, kann eine Nachsortierung, eventuell unter Zugabe von Wasser, vorgenommen werden. An der Stelle, an der der Rejekt R oder das resistente Material M''' aus dem System herausgeführt wird, also hier dem Übergang zwischen der ersten Sektion 5 und der zweiten Sektion 6, kann die Möglichkeit vorgesehen sein, den Spalt, der zwischen benachbarten Schlegelwalzen besteht, zu öffnen, um ein Verstopfen der Vorrichtung zu verhindern. Zu diesem Zweck ist hier die Möglichkeit angedeutet, daß die beiden Schlegelwalzen der zweiten Sektion 6 in einem Rahmen 11 gelagert sind, welcher pendelnd oder federnd aufgehängt ist. Bei der hier gezeigten Ausführungsform kann so der Rahmen 11 automatisch oder mit Hilfe einer speziellen Vorrichtung im Bedarfsfall abschwenken. Es können aber auch andere Ausweichbewegungen, z.B. nach oben, vorgesehen sein.

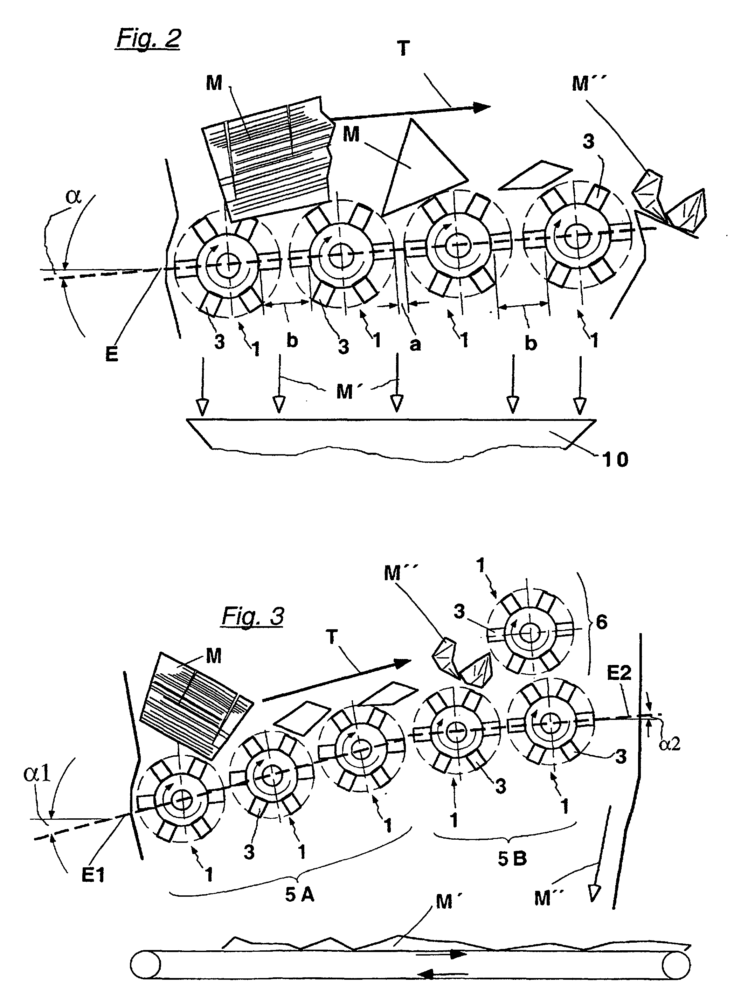

Die Fig. 1 ist nicht geeignet, spezielle konstruktive Details der gezeigten Vorrichtungen zu zeigen. Es sollen lediglich eine mögliche Form des Verfahrensablaufes und entsprechende Maschinenfunktionen erläutert werden. Die Anzahl der benötigten Schlegelwalzen ist in der Praxis zumeist höher als hier oder in den Figuren 2 bis 4 gezeichnet.

Nach Fig. 2 kann das erfindungsgemäße Verfahren auch mit einer einfacheren Vorrichtung als in Fig. 1 durchgeführt werden. An dem gezeigten Verfahren sind vier Schlegelwalzen 1 beteiligt, welche alle in einer Ebene E liegen. Die Funktion ist ähnlich wie bereits beschrieben, wobei hier allerdings der Teil des Materials M, der den Bereich über allen beteiligten Schlegelwalzen 1 durchlaufen hat, als Grobmaterial M" abgeführt wird. Durch eine höhere Anzahl von Schlegelwalzen (also mehr als die gezeigten vier) und/oder einen steileren Stellwinkel α (z.B. ca. 40°) läßt sich die Auflockerungswirkung des Verfahrens verstärken. Eventuell können auch weitere Schritte unternommen werden, um aus dem Grobmaterial M" die eventuell anhaftenden Faserstoffe noch zu entfernen. Wenn es die Platzverhältnisse erlauben, kann, wie in Fig. 2 gezeigt, das Feinmaterial M' durch direkten Fall (oder mit Hilfe einer Rutsche) in einen Stofflöser 10 gelangen.

Bei der in Fig. 3 gezeigten Variante wird das Material, ähnlich wie in Fig. 1, in zwei Sektionen bearbeitet, wobei die erste Sektion ihrerseits unterteilt ist in zwei Gruppen 5A und 5B. Diese bestehen hier aus zunächst drei hintereinander in einer Ebene E1 liegenden Schlegelwalzen 1, wobei die Ebene mit dem Stellwinkel α 1 gegenüber der Horizontalen ausgerichtet ist, sowie einer zweiten Gruppe 5B in der Ebene E2 mit einem Stellwinkel α 2. Bei dieser Anordnung können die Schlegelwalzen beider Gruppen mit unterschiedlicher Drehzahl betrieben werden, vorzugsweise in der zweiten Gruppe 5B langsamer als in der ersten Gruppe 5A. Mit der in dieser Figur gezeigten Anordnung ist insbesondere die Zurückführung der beim ersten Durchlauf nicht genügend zerkleinerten Teile des Materials M leichter möglich. Dabei ist davon auszugehen, daß die oben liegende Schlegelwalze der zweiten Sektion 6 dem ankommenden Grobmaterial M" einen Impuls gegen die Transportrichtung T vermittelt, so daß die bisher abgewiesenen Teile in den früheren Bereich zurückgelangen.

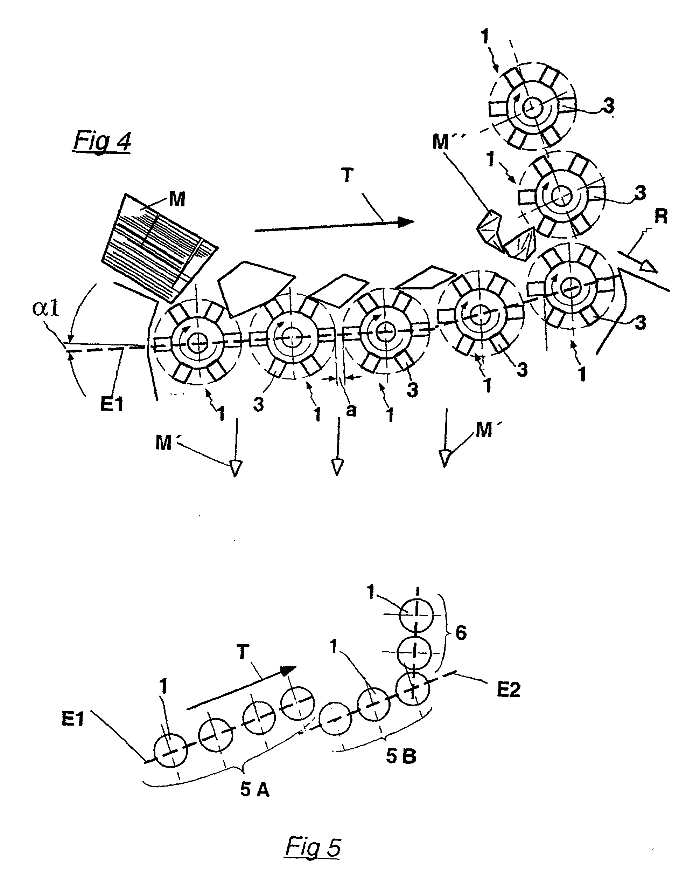

Gemäß Fig. 4 ist die erste Sektion wiederum in zwei Gruppen unterteilt, deren Ebenen in unterschiedlichem Winkel zur Horizontalen stehen. (Gezeichnet ist nur die Ebene E1 und der Stellwinkel α 1). Diese Ausführungsform weicht u.a. von den in Fig. 3 gezeigten dadurch ab, daß im initialen Bereich der ersten Sektion ein relativ flacher Stellwinkel α 1 gewählt wurde und in der zweiten Gruppe dieser Sektion ein steilerer. Wie bereits ausgeführt wurde, ist es in vielen Fällen möglich, durch unterschiedliche Stellwinkel auf die konkreten Voraussetzungen und Bedingungen des Verfahrens zu reagieren. Es hat sich nämlich herausgestellt, daß die Neigung des zugegebenen Materials M in Transportrichtung T transportiert zu werden, sehr unterschiedlich ist. Es gibt Ballen oder Ballenbruchstücke, die relativ schnell den initialen Bereich, also den Anfang der ersten Sektion, durchlaufen und dabei vollkommen aufgelockert werden, während das bei anderen nicht der Fall ist. Um die verwendeten Vorrichtungen optimal zu nutzen und einen möglichst guten Effekt des Verfahrens zu erzielen, können unterschiedliche Stellwinkel, unterschiedliche Drehzahlen und unterschiedliche Walzenanzahlen gewählt werden.

Wie in Fig. 5 in einem sehr einfachen Schema gezeigt ist, kann die erste Sektion derart in zwei Gruppen 5A und 5B unterteilt werden, daß die Ebenen E1 und E2 der Gruppen gegeneinander höhenversetzt sind. So kann in der Höhe Platz eingespart werden. Der Rücktransport aus der zweiten Sektion 6 ginge dann zumeist nur bis zum Übergang zwischen den beiden Gruppen, was durchaus erwünscht sein kann.

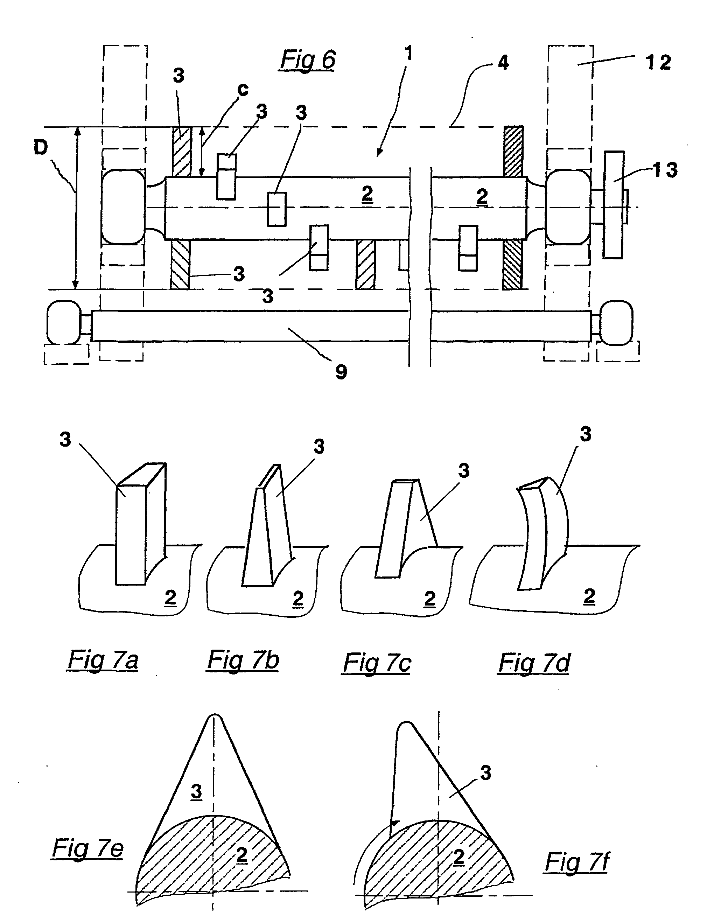

Die Fig. 6 zeigt als Ausschnitt einer verwendbaren Vorrichtung eine Schlegelwalze 1 mit darauf starr befestigten Schlegeln 3. Zusammen mit den Schlegeln hat die Schlegelwalze einen Außendurchmesser D, der zweckmäßigerweise zwischen 200 mm und 500 mm, maximal 1000 mm, liegt. Die Schlegel 3 allein können mit Vorteil eine radiale Erstreckung c von 50 bis 400 mm haben. Vorzugsweise sind sie aus Stahl. Man erkennt, daß benachbarte Schlegel 3 auf der Schlegelwalze 1 in Umfangsrichtung zueinander versetzt angeordnet sind. Die Verbindungspunkte zur Welle 2 der Schlegelwalze 1 können einen schraubenlinienförmigen Verlauf haben. Der Sinn dieser Anordnung liegt darin, daß das im Betrieb daraufliegende, zu zerkleinernde Material jeweils axial an verschiedenen Stellen getroffen wird und dadurch leichte Quer- und Drehbewegungen ausüben kann. Das gibt Querkraftskomponenten, die die Auflockerung und Zerkleinerung des Materials begünstigen.

Die Blickrichtung der Figur 6 ist so gewählt, daß sie der Transportrichtung T entspricht Unterhalb der Schlegelwalzen, von denen hier nur eine gezeichnet ist, befindet sich das Förderband 9, welches dem Abtransport des Feinmaterials dient, das zwischen den Schlegelwalzen herabgefallen ist. Die Walzen des Förderbandes und die Schlegelwalzen sind in geeigneten Maschinenrahmen 12,12', die hier allerdings nur angedeutet sind, gelagert. Die Schlegelwalzen 1 werden durch Antriebsräder 13 in Rotation versetzt; diese können z.B. Kettenräder oder Zahnräder sein. Ein umlaufender Kettenantrieb hat den Vorteil, daß der Abstand der Walzen mit einfachen Mitteln verändert werden kann und daß alle dadurch erfaßten Schlegelwalzen ohne Zwischenräder in gleicher Drehrichtung antreibbar sind. Es kann aber auch von besonderem Vorteil sein, die Schlegelwalzen einzeln anzutreiben. Dann kann die Umdrehungsgeschwindigkeit individuell gewählt werden, z.B. um die Wirkung einzelner Bereiche der das Verfahren ausführenden Vorrichtung zu ändern bzw. zu steuern. Hierzu kann auch ein Regler verwendet werden, der die Effektivität des Verfahrens steuert.

In den Figuren 7a bis 7d sind einige denkbare Schlegelformen perspektivisch dargestellt. Fig 7a zeigt einen Schlegel 3 mit gleichmäßigem Rechteckprofil, Fig 7b eine dachähnliche Form, deren Oberkante in Umfangsrichtung steht, und Fig 7c eine dachähnliche Form mit axial ausgerichteter Oberkante. Der Schlegel 3 gemäß Fig. 7d hat eine sichelartige Form. Die Fig. 7e und 7f zeigen in Seitenansicht zwei weitere Ausführungsformen, und zwar in Fig. 7e einen symmetrischen und in Fig. 7f einen unsymmetrischen Nocken. Die in Drehrichtung vordere Kante ist jeweils schräg, wodurch z.B. Drähte abgewiesen werden.

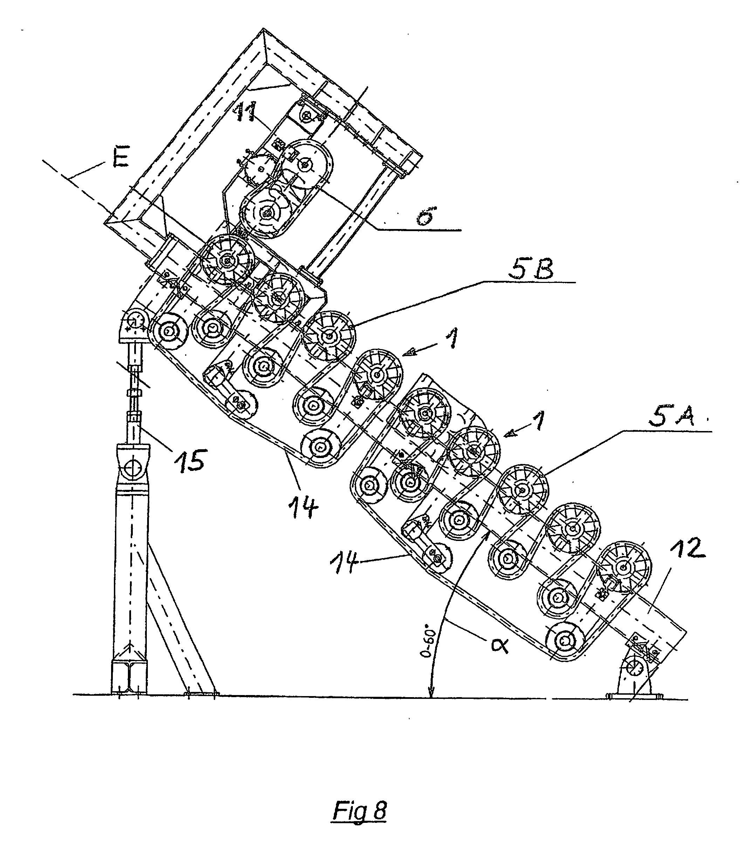

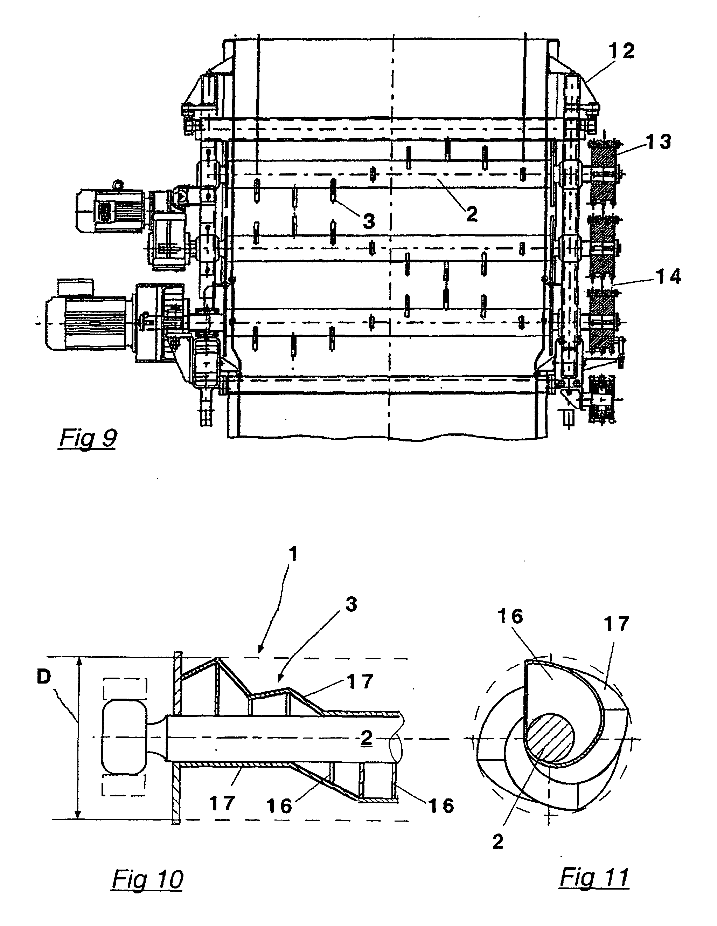

Fig. 8 und 9 zeigen zwar immer noch vereinfacht, aber detaillierter als die anderen Figuren und maßstabsgerecht eine erfindungsgemäße Vorrichtung zur Durchführung des Verfahrens. Man sieht einen Maschinenrahmen 12 mit einem neigungsverstellbaren, hier 60° geneigten Teil, auf dem insgesamt neun mit Schlegeln 3 versehene Schlegelwalzen 1 befestigt sind. Diese erste Sektion ist in zwei Gruppen, nämlich eine erste Gruppe 5A mit fünf Schlegelwalzen, und eine zweite Gruppe 5B mit vier Schlegelwalzen unterteilt. Beide Gruppen haben zwar denselben Stellwinkel, maximal 60°, sind aber jeweils mit getrennten Antrieben versehen, so daß unterschiedliche Drehzahlen und damit Umfangsgeschwindigkeiten eingestellt werden können. Zum Antrieb werden umlaufende Ketten 14 verwendet. Am Ende der zweiten Gruppe 5B befindet sich die zweite Sektion 6, welche mit zwei Schlegelwalzen und entsprechenden Schlegeln ausgestattet ist und die auch einen getrennten Antrieb hat. Die Verstellvorrichtung 15 für den Stellwinkel kann in der dargestellten Form nur mit Werkzeugen verändert werden. Es ist aber auch möglich, den Stellwinkel z.B. hydraulisch oder motorisch einstellbar zu machen.

Fig. 9 zeigt in ähnlicher Form, wie eingangs der Beschreibung zu Fig. 8 erwähnt, dieselbe erfindungsgemäße Vorrichtung in Ansicht von vorne.

Zwar sind die Schlegel in den bisher beschriebenen Figuren exemplarisch als separate aufgesetzte Teile gezeichnet, sie können aber auch axial miteinander direkt verbunden sein. Ein extremes Beispiel hierfür zeigt die Fig. 10. Demgemäß ist die Welle 2 mit einer Anzahl von unsymmetrischen, gegeneinander versetzten Stützscheiben 16 umgeben. Diese tragen ein als Hüllblech realisiertes Flächenelement 17, das als Bearbeitungsfläche für das Material M wirkt. Diese Ausführungsform der Schlegelwalzen ist unempfindlicher gegen spinnende Teile wie etwa Bänder und Drähte, da diese sich nicht so leicht an den Schlegeln verhaken können. Außerdem ist ihr Verschleiß geringer. Eine solche mit zusammenhängender Bearbeitungsfläche versehene Schlegelwalze kann natürlich auch anders, z.B. durch Schmieden oder axial zusammengefügte Einzelelemente hergestellt sein.

Fig. 11 zeigt einen Schnitt durch die Schlegelwalze der Fig. 10. Wie auch Fig. 10 stellt sie keine konstruktiven Details dar, sondern den prinzipiellen Aufbau.

## Patentansprüche

1. Verfahren zum Auflockern von gepreßtem papierfaserhaltigen Material (M), welches Papier- oder Kartonbahnen aufweist und einen Wassergehalt von 70 % nicht überschreitet,
**dadurch gekennzeichnet,**
**daß** das Material (M) über mindestens drei im wesentlichen in einer Ebene (E) zueinander angeordneten Schlegelwalzen (1) transportiert wird, wobei die Transportrichtung (T) im wesentlichen parallel zu dieser Ebene (E) und quer zu deren Achsen ist,
**daß** die Schlegelwalzen (1) mit umlaufenden Schlegeln (3) versehen sind, welche in das Material (M) eindringen und es auflockern,
**daß** zwischen den Schlegelwalzen (1) Zwischenräume gelassen werden, durch die das zerkleinerte Feinmaterial (M') herabfällt, und dadurch von dem weniger oder nicht aufgelockerten Material getrennt wird.

2. Verfahren nach Anspruch 1,
**dadurch gekennzeichnet,**
**daß** das nicht durch die Zwischenräume hindurchgelangte Grobmaterial (M") abgeführt wird.

3. Verfahren nach Anspruch 1 oder 2,
**dadurch gekennzeichnet,**
**daß** das Material (M) zu Beginn des Auflockerns und Zerkleinerns aus Ballen oder groben Bruchstücken von Ballen besteht, die zumindest teilweise eine Masse von mindestens 100 kg haben.

4. Verfahren nach Anspruch 3,
**dadurch gekennzeichnet,**
**daß** das Material (M) im wesentlichen keine Bindedrähte oder Bänder enthält.

5. Verfahren nach Anspruch 1, 2, 3 oder 4,
**dadurch gekennzeichnet,**
**daß** die Ebene (E) in einem Stellwinkel (α) zwischen 0° und 90°, vorzugsweise 20° bis 50°, gegenüber der Horizontalen angestellt wird.

6. Verfahren nach Anspruch 5,
**dadurch gekennzeichnet,**
**daß** der Stellwinkel (α, α1, α2) so eingestellt wird, daß sich das Material (M) über den Schlegelwalzen (1) in Transportrichtung (T) möglichst gleichmäßig verteilt.

7. Verfahren nach einem der voranstehenden Ansprüche,
**dadurch gekennzeichnet,**
**daß** die Transportrichtung (T) quer zu der Richtung ist, in der das Material (M) den Schlegelwalzen (1) zugeführt wird.

8. Verfahren nach einem der Ansprüche 2 bis 7,
**dadurch gekennzeichnet,**
**daß** das Grobmaterial (M") mit dem Feinmaterial (M') gemeinsam weiter verarbeitet wird.

9. Verfahren nach einem der voranstehenden Ansprüche,
**dadurch gekennzeichnet,**
**daß** das Feinmaterial (M') in einen Stofflöser geführt wird und darin in eine Suspension überführt wird.

10. Verfahren nach einem der voranstehenden Ansprüche,
**dadurch gekennzeichnet,**
**daß** mit den Schlegeln (3) Kräfte auf das Material (M) übertragen werden, welche als Querkräfte auch eine Komponente haben, die in der Richtung der Achsen der Schlegelwalzen (1) liegt.

11. Verfahren nach einem der voranstehenden Ansprüche,
**dadurch gekennzeichnet,**
**daß** sich zwischen den Hüllkreisen (4) der umlaufenden Schlegel (3) der Schlegelwalzen (1) Zwischenräume befinden, die so bemessen sind, daß zugegebenes Material (M), welches durch Kontakt mit den Schlegeln (3) der Schlegelwalzen (1) aufgelockert worden ist, durch die Zwischenräume herabfallen kann.

12. Verfahren nach einem der voranstehenden Ansprüche,
**dadurch gekennzeichnet,**
**daß** die Schlegelwalzen (1) so angeordnet und dimensioniert werden, daß zwischen den Wellen (2) Zwischenräume mit einer lichten Weite (b) zwischen 200 und 1000 mm entstehen.

13. Verfahren nach einem der voranstehenden Ansprüche,
**dadurch gekennzeichnet,**
**daß** ein Teil der Schlegelwalzen (1) zu einer ersten Sektion (5) und ein anderer Teil zu einer zweiten Sektion (6) zusammengefaßt werden, wobei die zweite Sektion (6) oberhalb und am stromabwärtigen Ende der ersten Sektion (5) angeordnet ist und mindestens eine weitere Schlegelwalze (1) mit umlaufenden Schlegeln (3) aufweist, welche nicht herabgefallenes Material in die erste Sektion (5) zurückführen.

14. Verfahren nach Anspruch 13,
**dadurch gekennzeichnet,**
**daß** auch in der zweiten Sektion (6) eine Auflockerung des nicht herabgefallenen Materials durchgeführt wird.

15. Verfahren nach Anspruch 13 oder 14,
**dadurch gekennzeichnet,**
**daß** mindestens eine Schlegelwalze (1) der zweiten Sektion (6) so ausweichen kann, daß sich der Abstand zur benachbarten Schlegelwalze (1) vergrößert.

16. Verfahren nach Anspruch 13, 14 oder 15,
**dadurch gekennzeichnet,**
**daß** in der zweiten Sektion (6) zwei Schlegelwalzen (1) übereinander angeordnet werden.

17. Verfahren nach einem der voranstehenden Ansprüche,
**dadurch gekennzeichnet,**
**daß** die Schlegel (3) mit einer Umfangsgeschwindigkeit zwischen 1 bis 3 m/sec betrieben werden.

18. Verfahren nach einem der voranstehenden Ansprüche,
**dadurch gekennzeichnet,**
**daß** benachbarte Schlegelwalzen (1) mit unterschiedlicher Drehzahl bewegt werden.

19. Verfahren nach einem der voranstehenden Ansprüche,
**dadurch gekennzeichnet,**
**daß** Schlegelwalzen (1) in Gruppen (5A, 5B) oder Sektionen (5, 6) mit jeweils gleicher Umfangsgeschwindigkeit und gleicher Drehrichtung betrieben werden und daß sich die Geschwindigkeiten der Gruppen voneinander unterscheiden.

20. Verfahren nach Anspruch 19,
**dadurch gekennzeichnet,**
**daß** die Umfangsgeschwindigkeit der Schlegelwalzen (1) einer Gruppe (5A, 5B) bzw. Sektion (5, 6) kleiner gewählt ist als die der Schlegelwalzen (1) in der stromabwärts gelegenen Gruppe.

21. Verfahren nach Anspruch 19 oder 20,
**dadurch gekennzeichnet,**
**daß** die Schlegelwalzen (1) einer Gruppe (5A, 5B) bzw. Sektion (5, 6) jeweils in einer Ebene (E, E1, E2) angeordnet werden.

22. Verfahren nach Anspruch 21,
**dadurch gekennzeichnet,**
**daß** unterschiedliche Ebenen (E, E1, E2) in unterschiedlichen Stellwinkeln (α, α1, α2) angestellt werden.

23. Verfahren nach einem der voranstehenden Ansprüche,
**dadurch gekennzeichnet,**
**daß** die gesamte spezifische Arbeit, die erforderlich ist, um das gepreßte papierfaserhaltige Material (M) durch Auflockern und gegebenenfalls Zerkleinern in Feinmaterial (M') umzuwandeln, maximal 10 kWh/to Feinmaterial (M'), atro gerechnet, beträgt.

24. Verfahren nach einem der voranstehenden Ansprüche,
**dadurch gekennzeichnet,**
**daß** der Wassergehalt des Materials (M) zwischen 3 % und 30 % liegt.

25. Verfahren nach einem der voranstehenden Ansprüche,
**dadurch gekennzeichnet,**
**daß** in bestimmten Zeitintervallen die Drehrichtung zumindest eines Teils der Schlegelwalzen (1) umgekehrt wird, und daß dadurch um die Welle (2) herumgewickelte Bänder, Folien oder sonstige längliche Gebilde abgewickelt und entfernt werden.

26. Vorrichtung zur Durchführung des Verfahrens nach einem der voranstehenden Ansprüche mit einem Maschinenrahmen (12),
mit einer Anzahl von nebeneinander im Maschinenrahmen (12) angeordneten, angetriebenen Rotoren,
deren Achsen zumindest teilweise in einer Ebene (E, E1, E2) liegen, wobei zwischen den Rotoren freie Spalte sind,
mit Mitteln zur Zuführung des zu behandelnden Materials (M) in einen Bereich oberhalb der Rotoren,
mit Mitteln zur Abführung des behandelten Materials aus einem Bereich unterhalb der Rotoren,
**dadurch gekennzeichnet,**
**daß** die Rotoren Schlegelwalzen (1) sind, an deren Wellen (2) Schlegel (3) befestigt sind,
**daß** zumindest ein Teil der benachbarten Schlegelwalzen (1) in derselben Drehrichtung anzutreiben ist.

27. Vorrichtung nach Anspruch 26,
**dadurch gekennzeichnet,**
**daß** Schlegelwalzen (1) und umlaufende Schlegel (3) so angeordnet und bemessen werden, daß die Hüllkreise (4) der Schlegel (3) von den Hüllkreisen (4) der benachbarten Schlegelwalzen (1) einen Abstand (a) von mindestens 30 mm aufweisen.

28. Vorrichtung nach Anspruch 26 oder 27,
**dadurch gekennzeichnet,**
**daß** sich die Schlegel (3) über die Welle (2) hinaus radial mindestens 50 mm erstrecken.

29. Vorrichtung nach Ansprüchen 26, 27 oder 28,
**dadurch gekennzeichnet,**
**daß** axial benachbarte Schlegel (3) auf den Wellen (2) der Schlegelwalzen (1), in Umfangsrichtung gegeneinander versetzt, angeordnet sind.

30. Vorrichtung nach Ansprüchen 26, 27, 28 oder 29,
**dadurch gekennzeichnet,**
**daß** die Schlegel (3) Arbeitsflächen aufweisen, welche gegenüber der Umfangsrichtung schräg gestellt sind.

31. Vorrichtung nach einem der Ansprüche 26 bis 30,
**dadurch gekennzeichnet,**
**daß** die Schlegel (3) eine Quaderform haben.

32. Vorrichtung nach einem der Ansprüche 26 bis 30,
**dadurch gekennzeichnet,**
**daß** die Schlegel (3) ein Dreikantprofil haben mit axial ausgerichteter Oberkante.

33. Vorrichtung nach einem der Ansprüche 26 bis 30,
**dadurch gekennzeichnet,**
**daß** die Schlegel (3) ein Dreikantprofil haben mit in Umfangsrichtung ausgerichteter Oberkante.

34. Vorrichtung nach einem der Ansprüche 26 bis 33,
**dadurch gekennzeichnet,**
**daß** sich die Schlegel (3) radial nach außen hin verjüngen.

35. Vorrichtung nach einem der Ansprüche 26 bis 34,
**dadurch gekennzeichnet,**
**daß** die Vorderseite der Schlegel (3) bezüglich der Drehbewegung rückwärts geneigt ist.

36. Vorrichtung nach einem der Ansprüche 26 bis 35,
**dadurch gekennzeichnet,**
**daß** axial benachbarte Schlegel (3) durch ein gemeinsames Flächenelement (17) miteinander verbunden sind, welches eine zusammenhängende Bearbeitungsfläche für das Material (M) bildet.

37. Vorrichtung nach Anspruch 36,
**dadurch gekennzeichnet,**
**daß** das Flächenelement (17) ein verschleißfestes Hüllblech ist.

38. Vorrichtung nach Anspruch 36 oder 38,
**dadurch gekennzeichnet,**
**daß** das Flächenelement (17) durch auf der Welle (2) unsymmetrisch angeordnete Stützscheiben (16) getragen wird, die wenigstens teilweise in Umfangsrichtung gegeneinander versetzt sind.

## Claims

1. Method for opening up compacted material (M) containing paper fibres, which contains sheets of paper or card and which does not exceed a water content of 70%,
**characterised in that**
the material (M) is carried over at least three beater rollers (1) which are positioned essentially in a single plane (E) in relation to one another, the direction of movement (T) being essentially parallel to this plane (E) and at right angles to its axes,
that the beater rollers (1) have rotating beaters (3) that penetrate the material (M) and open it up,
that gaps are left between the beater rollers (1), through which the reduced fine-grade material (M') drops, thus becoming separated from the material which has been opened up to a lesser degree or not at all.

2. Method as in Claim 1,
**characterised in that**
the coarse-grade material (M") that does not pass through the gaps is taken away.

3. Method as in Claim 1 or 2,
**characterised in that**,
at the start of the opening and reducing process, the material (M) is in the form of bales, or large fragments of bales, at least some of which have a mass of at least 100 kg.

4. Method as in Claim 3,
**characterised in that**
the material (M) essentially contains no binding wires or bands.

5. Method as in Claim 1, 2, 3 or 4,
**characterised in that**
the plane (E) is set at an angle (α) of between 0° and 90°, preferably of between 20° and 50°, to the horizontal.

6. Method as in Claim 5,
**characterised in that**
the angle (α, α1, α2) is set so that the material (M) is spread as evenly as possible across the beater rollers (1) in the direction of movement (T).

7. Method as in one of the preceding Claims,
**characterised in that**
the direction of movement (T) is at right angles to the direction in which the material (M) is fed to the beater rollers (1).

8. Method as in one of Claims 2 to 7,
**characterised in that**
the coarse-grade material (M") is processed further together with the fine-grade material (M').

9. Method as in one of the preceding Claims,
**characterised in that**
the fine-grade material (M') is fed to a pulper, in which it is converted into a suspension.

10. Method as in one of the preceding Claims,
**characterised in that**
forces are transferred by the beaters (3) to the material (M) which, in the form of lateral forces, also have a component that lies in the direction of the axles of the beater rollers (1).

11. Method as in one of the preceding Claims,
**characterised in that**
there are gaps between the envelope diameters (4) of the rotating beaters (3) of the beater rollers (1) that are calculated so that fed-in material (M), which is opened up by contact with the beaters (3), is able to fall through the gaps.

12. Method as in one of the preceding Claims,
**characterised in that**
the beater rollers (1) are positioned and dimensioned in such a way that there are gaps between the shafts (2) with a clearance (b) of between 200 and 1000 mm.

13. Method as in one of the preceding Claims,
**characterised in that**
some of the beater rollers (1) are combined to form a first section (5), and some to form a second section (6), the second section (6) being positioned above, and at the downstream end of, the first section (5), and having at least one additional beater roller (1) with rotating beaters (3) which take material that has not fallen through back to the first section (5).

14. Method as in Claim 13,
**characterised in that**
an opening up of the material which has not fallen through is also carried out in the second section (6).

15. Method as in Claim 13 or 14,
**characterised in that**
at least one beater roller (1) of the second section (6) can be displaced in such a way that the distance to the adjacent beater roller (1) is increased.

16. Method as in Claim 13, 14 or 15,
**characterised in that**,
in the second section (6), two beater rollers (1) are positioned on top of one another.

17. Method as in one of the preceding Claims,
**characterised in that**
the beaters (3) are operated at a circumferential speed of between 1 and 3 m/sec.

18. Method as in one of the preceding Claims,
**characterised in that**
adjacent beater rollers (1) are moved at different rotational speeds.

19. Method as in one of the preceding Claims,
**characterised in that**
beater rollers (1) are operated, within each of groups (5A, 5B) or sections (5, 6), at the same circumferential speed and the same direction of rotation, and that the speeds of the groups are different from one another.

20. Method as in Claim 19,
**characterised in that**
the circumferential speed of the beater rollers (1) of one group (5A, 5B) or section (5, 6) is set to be lower than that of the beater rollers (1) in the group that lies downstream.

21. Method as in Claim 19 or 20,
**characterised in that**
the beater rollers (1) in each group (5A, 5B) or section (5, 6) are positioned within a single plane (E, E1, E2).

22. Method as in Claim 21,
**characterised in that**
different planes (E, E1, E2) are set at different angles (α, α1, α2).

23. Method as in one of the preceding Claims,
**characterised in that**
the entire specific operation that is necessary to convert the compacted material containing paper fibres into fine-grade material (M') by opening it up and, if necessary, reducing it, amounts to a maximum of 10 kWh per tonne of fine-grade material (M'), measured in the dry condition.

24. Method as in one of the preceding Claims,
**characterised in that**
the water content of the material (M) is between 3% and 30%.

25. Method as in one of the preceding Claims,
**characterised in that**,
at certain time intervals, the direction of rotation of at least some of the beater rollers (1) is reversed and that, as a result, any bands, foils or other long-shaped objects wrapped around the shaft (2) are unwound and removed.

26. Apparatus for implementing the method as in one of the preceding claims, with a machine frame (12),
with a number of powered rotors positioned next to one another in the machine frame (12),
the axles of which lie at least partly in a plane (E, E1, E2),
there being open gaps between the rotors,
with means of feeding the material (M) which is to be treated into an area above the rotors,
with means of removing the treated material from an area underneath the rotors,
**characterised in that**
the rotors are beater rollers (1), on to the shafts (2) of which are secured beaters (3), that at least some of the adjacent beater rollers (1) are driven in the same direction of rotation.

27. Apparatus as in Claim 26 or 27,
**characterised in that**
the beater rollers (1) and rotating beaters (3) are positioned and dimensioned in such a way that the envelope diameters (4) of the beaters (3) are separated from the envelope diameters (4) of the adjacent beater rollers (1) by a distance (a) of at least 30 mm.

28. Apparatus as in Claim 26 or 27,
**characterised in that**
the beaters (3) extend radially at least 50 mm beyond the shaft (2).

29. Apparatus as in Claims 26, 27 or 28,
**characterised in that**
axially adjacent beaters (3) are positioned offset in relation to each other in the direction of the circumference on the shafts (2) of the beater rollers (1).

30. Apparatus as in Claims 26, 27, 28 or 29,
**characterised in that**
the beaters (3) have working surfaces that are set at an angle to the direction of the circumference.

31. Apparatus as in one of Claims 26 to 30,
**characterised in that**
the beaters (3) are cuboid in shape.

32. Apparatus as in one of Claims 26 to 30,
**characterised in that**
the beaters (3) have a trihedral profile with the top edge aligned axially.

33. Apparatus as in one of Claims 26 to 30,
**characterised in that**
the beaters (3) have a trihedral profile with the top edge aligned with the circumference.

34. Apparatus as in one of Claims 26 to 33,
**characterised in that**
the beaters (3) taper radially outwards.

35. Apparatus as in one of Claims 26 to 34,
**characterised in that**
the front of the beaters (3) is inclined backwards in relation to the direction of rotation.

36. Apparatus as in one of Claims 26 to 35,
**characterised in that**
axially adjacent beaters (3) are linked together by a mutual surface element (17) which forms a continuous treatment surface for the material (M).

37. Apparatus as in Claim 36,
**characterised in that**
the surface element (17) is an abrasion resistant casing sheet.

38. Apparatus as in Claim 36 or 38,
**characterised in that**
the surface element (17) is held on supporting plates, which are positioned asymmetrically on the shaft (2), and at least some of which are offset in relation to each other in the direction of the circumference.

## Revendications

1. Procédé pour désagréger un matériau (M) pressé contenant des fibres de papier, qui comporte des bandes de papier ou de carton et dont la teneur en eau ne dépasse pas 70 %, **caractérisé en ce que** le matériau (M) est transporté par au moins trois cylindres batteurs (1) disposés sensiblement dans un plan (E), la direction de transport (T) étant sensiblement parallèle à ce plan (E) et transversale à ses axes, **en ce que** les cylindres batteurs (1) sont pourvus de battoirs (3) tournants qui pénètrent dans le matériau (M) et le désagrègent, **en ce qu'**entre les cylindres batteurs (1) sont laissés des interstices à travers lesquels tombe le matériau fin (M') fragmenté qui de ce fait est séparé du matériau moins désagrégé ou pas désagrégé.

2. Procédé selon la revendication 1, **caractérisé en ce que** le matériau grossier (M") qui n'a pas traversé les interstices est évacué.

3. Procédé selon la revendication 1 ou 2, **caractérisé en ce qu'**au début de la désagrégation et de la fragmentation, le matériau (M) est constitué de balles ou de fragments grossiers de balles qui présentent au moins en partie une masse d'au moins 100 kg.

4. Procédé selon la revendication 3, **caractérisé en ce que** le matériau (M) ne contient pratiquement pas de fils métalliques d'attache ni de rubans.

5. Procédé selon la revendication 1, 2, 3 ou 4, **caractérisé en ce que** le plan (E) est incliné par rapport à l'horizontale suivant un angle d'inclinaison (α) compris entre 0° et 90°, de préférence entre 20° et 50°.

6. Procédé selon la revendication 5, **caractérisé en ce que** l'angle d'inclinaison (α,α1, α2) est réglé de manière que le matériau (M) soit réparti aussi uniformément que possible sur les cylindres batteurs (1) dans la direction de transport (T).

7. Procédé selon l'une des revendications précédentes, **caractérisé en ce que** la direction de transport (T) est transversale à la direction dans laquelle le matériau (M) est envoyé aux cylindres batteurs (1).

8. Procédé selon l'une des revendications 2 à 7, **caractérisé en ce que** le matériau grossier (M") est traité en complément avec le matériau fin (M').

9. Procédé selon l'une des revendications précédentes, **caractérisé en ce que** le matériau fin (M') est envoyé dans un pulpeur et y est transformé en une suspension.

10. Procédé selon l'une des revendications précédentes, **caractérisé en ce que** les battoirs (3) transmettent au matériau (M) des forces qui en tant que forces transversales ont aussi une composante qui se situe dans la direction des axes des cylindres batteurs (1).

11. Procédé selon l'une des revendications précédentes, **caractérisé en ce qu'**entre les cercles (4) enveloppant les battoirs (3) tournants des cylindres batteurs (1), se trouvent des interstices qui ont des dimensions telles que le matériau (M) ajouté, qui a été désagrégé par contact avec les battoirs (3) des cylindres batteurs (1), peut tomber à travers les interstices.

12. Procédé selon l'une des revendications précédentes, **caractérisé en ce que** les cylindres batteurs (1) sont disposés et dimensionnés de manière qu'il se forme entre les arbres (2) des interstices d'une largeur libre (b) comprise entre 200 et 1 000 mm.

13. Procédé selon l'une des revendications précédentes, **caractérisé en ce qu'**une partie des cylindres batteurs (1) d'une première section (5) et une autre partie d'une deuxième section (6) sont réunies, la deuxième section (6) étant disposée au-dessus et à l'extrémité aval de la première section (5) et comportant au moins un autre cylindre batteur (1) à battoirs (3) tournants qui refoule le matériau qui n'est pas tombé dans la première section (5).

14. Procédé selon la revendication 13, **caractérisé en ce que** dans la deuxième section (6) aussi est effectuée une désagrégation du matériau qui n'est pas tombé.

15. Procédé selon la revendication 13 ou 14, **caractérisé en ce qu'**au moins un cylindre batteur (1) de la deuxième section (6) peut s'écarter de manière à agrandir la distance par rapport au cylindre batteur (1) voisin.

16. Procédé selon la revendication 13, 14 ou 15, **caractérisé en ce que** dans la deuxième section (6) deux cylindres batteurs (1) sont superposés.

17. Procédé selon l'une des revendications précédentes, **caractérisé en ce que** les battoirs (3) fonctionnent à une vitesse périphérique comprise entre 1 et 3 m/s.

18. Procédé selon l'une des revendications précédentes, **caractérisé en ce que** des cylindres batteurs (1) voisins sont mis en mouvement à une vitesse de rotation différente.

19. Procédé selon Tune des revendications précédentes, **caractérisé en ce que** des cylindres batteurs (1) de groupes (5A, 5B) ou de sections (5, 6) fonctionnent tous à la même vitesse périphérique et dans le même sens de rotation et **en ce que** les vitesses des groupes sont différentes les unes des autres.

20. Procédé selon la revendication 19, **caractérisé en ce que** la vitesse périphérique des cylindres batteurs (1) d'un groupe (5A, 5B) ou d'une section (5, 6) est choisie inférieure à celle des cylindres batteurs (1) du groupe situé en aval.

21. Procédé selon la revendication 19 ou 20, **caractérisé en ce que** les cylindres batteurs (1) d'un groupe (5A, 5B) ou d'une section (5, 6) sont tous disposés dans un plan (E, E1, E2).

22. Procédé selon la revendication 21, **caractérisé en ce que** des plans (E, E1, E2) différents sont inclinés suivant des angles d'inclinaison (α,α1,α2) différents.

23. Procédé selon l'une des revendications précédentes, **caractérisé en ce que** tout le travail spécifique qui est nécessaire pour transformer le matériau (M) pressé contenant des fibres de papier en matériau fin (M'), par désagrégation et éventuellement fragmentation, est au maximum de 10 kWh/t de matériau fin (M') calculé à siccité absolue.

24. Procédé selon l'une des revendications précédentes, **caractérisé en ce que** la teneur en eau du matériau (M) se situe entre 3 % et 30 %.

25. Procédé selon l'une des revendications précédentes, **caractérisé en ce que** le sens de rotation d'au moins une partie des cylindres batteurs (1) est inversé à intervalles de temps déterminés, et **en ce que** par là des bandes, feuilles ou autres corps oblongs enroulés autour de l'arbre (2) sont déroulés et éliminés.

26. Dispositif pour la mise en oeuvre du procédé selon l'une des revendications précédentes, comportant un cadre de machine (12), comportant un certain nombre de rotors entraînés, disposés côte à côte dans le cadre de machine (12) dont les axes se situent au moins en partie dans un plan (E, E1, E2), des fentes libres se trouvant entre les rotors, comportant des moyens pour amener le matériau (M) à traiter dans une zone située au-dessus des rotors, comportant des moyens pour évacuer le matériau traité d'une zone située au-dessous des rotors, **caractérisé en ce que** les rotors sont des cylindres batteurs (1) sur les arbres (2) desquels sont fixés des battoirs (3), et **en ce qu'**au moins une partie des cylindres batteurs (1) voisins doit être entraînée dans le même sens de rotation.

27. Dispositif selon la revendication 26, **caractérisé en ce que** des cylindres batteurs (1) et des battoirs (3) tournants sont disposés et dimensionnés de manière que les cercles (4) enveloppant les battoirs (3) présentent par rapport aux cercles (4) enveloppant les cylindres batteurs (1) voisins, une distance (a) d'au moins 30 mm.

28. Dispositif selon la revendication 26 ou 27, **caractérisé en ce que** les battoirs (3) s'étendent radialement au-delà de l'arbre (2) au moins sur 50 mm.

29. Dispositif selon les revendications 26, 27 ou 28, **caractérisé en ce que** des battoirs (3) axialement voisins sont disposés sur les arbres (2) des cylindres batteurs (1), décalés les uns par rapport aux autres dans la direction périphérique.

30. Dispositif selon les revendications 26, 27, 28 ou 29, **caractérisé en ce que** les battoirs (3) présentent des surfaces de travail qui sont inclinées par rapport à la direction périphérique.

31. Dispositif selon l'une des revendications 26 à 30, **caractérisé en ce que** les battoirs (3) ont une forme parallélépipédique.

32. Dispositif selon l'une des revendications 26 à 30, **caractérisé en ce que** les battoirs (3) ont un profil triangulaire avec bord supérieur orienté axialement.

33. Dispositif selon l'une des revendications 26 à 30, **caractérisé en ce que** les battoirs (3) ont un profil triangulaire avec bord supérieur orienté dans la direction périphérique.

34. Dispositif selon l'une des revendications 26 à 33, **caractérisé en ce que** les battoirs (3) se rétrécissent radialement vers l'extérieur.

35. Dispositif selon l'une des revendications 26 à 34, **caractérisé en ce que** la face avant des battoirs (3) est inclinée vers l'arrière par rapport au mouvement de rotation.

36. Dispositif selon l'une des revendications 26 à 35, **caractérisé en ce que** des battoirs (3) axialement voisins sont reliés entre eux par un élément de surface (17) commun qui constitue une surface de traitement d'un seul tenant pour le matériau (M).

37. Dispositif selon la revendication 36, **caractérisé en ce que** l'élément de surface (17) est une tôle d'enveloppe résistante à l'usure.

38. Dispositif selon la revendication 36 ou 38, **caractérisé en ce que** l'élément plan (17) est supporté par des disques d'appui (16) disposés asymétriquement sur l'arbre (2), qui sont décalés au moins en partie les uns par rapport aux autres dans la direction périphérique.
